(19) Europäisches Patentamt
European Patent Office
Office européen des brevets

(11) Veröffentlichungsnummer: **0 242 732 B1**

(12) **EUROPÄISCHE PATENTSCHRIFT**

(45) Veröffentlichungstag der Patentschrift: **08.01.92**

(51) Int. Cl.5: **C08L 77/06**, C08L 85/02, C08L 77/00

(21) Anmeldenummer: **87105306.2**

(22) Anmeldetag: **10.04.87**

# (54) Flammfeste Polyamide.

(30) Priorität: **22.04.86 DE 3613490**
**22.04.86 DE 3613491**

(43) Veröffentlichungstag der Anmeldung:
**28.10.87 Patentblatt 87/44**

(45) Bekanntmachung des Hinweises auf die Patenterteilung:
**08.01.92 Patentblatt 92/02**

(84) Benannte Vertragsstaaten:
**DE ES FR GB IT NL**

(56) Entgegenhaltungen:
**EP-A- 0 077 493**
**DE-A- 1 770 359**
**DE-A- 2 944 093**
**US-A- 4 078 016**

**PATENT ABSTRACTS OF JAPAN, Band 1, Nr. 120 (C-77), 12. Oktober 1977, Seite 2849 C 77; & JP - A - 52 82955 (TOYO BOSEKI) 07.11.1977**

**PATENT ABSTRACTS OF JAPAN, Band 7, Nr. 39 (C-151)[1184], 17. Februar 1983; & JP - A - 57 192 460 (TEIJIN) 26.11.1982**

(73) Patentinhaber: **BAYER AG**

**W-5090 Leverkusen 1 Bayerwerk(DE)**

(72) Erfinder: **Nielinger, Werner, Dr.**
**Bärenstrasse 21**
**W-4150 Krefeld(DE)**
Erfinder: **Kauth,Hermann,Dr.**
**Kolpingstrasse 34**
**W-4150 Krefeld 11(DE)**
Erfinder: **Füllmann, Heinz-Josef, Dr.**
**Am Schneeberg 31**
**W-5653 Leichlingen 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 242 732 B1

## Beschreibung

Die Erfindung betrifft thermoplastisch verarbeitbare, flammfeste Polyamidmassen, die aus Mischungen aus amorphen, teilaromatischen Polyamiden und 3-40 Gew.-% an Polyphosphonaten bestehen.

Polyamide haben aufgrund ihrer guten mechanischen und elektrischen Eigenschaften sowie wegen ihrer guten Beständigkeit gegen Chemikalien vielfache Anwendung als Werkstoff für den technischen Bereich gefunden. Sie dienen zur Herstellung von Teilen für den Maschinenbau und Automobilbau, ferner zur Herstellung von Gehäusen, Abdeckungen und Schaltkästen. Dabei gewinnen vor allem für den Elektrosektor brandwidrige Produkte immer mehr an Bedeutung. Gerade für diese Anwendungen ist die Verwendung von Polyamiden in brandwidriger Einstellung und mit guten elektrischen Eigenschaften, wie hoher Kriechstromfestigkeit, wünschenswert. Durch den Zusatz der bekannten Flammschutzmittel werden diese Anforderungen nicht immer erfüllt. Oft erhält man auch trübe, undurchsichtige Produkte beim Flammfestausrüsten transparenter Polyamide.

So ist es bisher nicht in zufriedenstellender Weise gelungen, aus den technisch wichtigen aliphatischen Polyamiden und Polyphosphonaten gut verarbeitbare Mischungen mit ausreichender Zähigkeit herzustellen. Wegen der beträchtlichen Erhöhung der Schmelzviskosität ist eine problemlose Compoundierung und nachfolgende Verarbeitung durch Spritzguß bei Mischungen mit hohem Polyamidanteil nicht möglich, während bei Mischungen mit hohem Polyphosphonatanteil die Zähigkeit drastisch abnimmt.

Überraschenderweise wurde nun gefunden, daß man amorphe, teilaromatischem, flammfeste, thermoplastisch gut verarbeitbare Polyamidmischungen erhält, die zu Polyamidmassen mit hoher Kriechstromfestigkeit führen, wenn man die Polyamide mit Phosphonaten ausrüstet. Bei dieser Flammfestmodifizierung behalten transparente Polyamide ihre Transparenz und zeigen nicht den Vernetzungseffekt wie bei Zusatz von Polyphosphonaten zu aliphatischen Polyamiden.

Gegenstand der Erfindung sind daher thermoplastische, flammfeste Formmassen aus amorphen, teilaromatischen Polyamiden, die 3 bis 40 Gew.-%, vorzugsweise 3 bis 20 Gew.-%, insbesondere 8 bis 15 Gew.-% an Polyphosphonaten in der Polyamid-/Polyphosphonat-Mischung neben 97 bis 60 Gew.-%, vorzugsweise 97 bis 80 Gew.-% und insbesondere 92 bis 85 Gew.-% an den genannten Polyamiden, sowie gegebenenfalls weitere, übliche Zusätze zu den Formmassen enthalten.

Geeignete Polyamide sind vorzugsweise solche, die zumindest zu 30 Mol-% aus aromatischen polyamidbildenden Komponenten, besonders bevorzugt zu 50 Mol-% aus aromatischen Dicarbonsäuren aufgebaut sind.

Beispiele für amorphe, teilaromatische Polyamide sind vorzugsweise solche aus aromatischen Dicarbonsäuren, wie Isophthalsäure oder Terephthalsäure, wobei gegebenenfalls aliphatische oder cycloaliphatische Dicarbonsäuren wie Adipinsäure, Sebazinsäure, Azelainsäure, Dekandicarbonsäure, Cyclohexandicarbonsäure mitverwendet werden können, und Diaminen. Die Auswahl der Diamine unterliegt keiner Beschränkung; es können alle zur Herstellung von thermoplatisch verformbaren Polyamiden geeigneten Diamine verwendet werden. Beispiele sind Tetramethylendiamin, Hexamethylendiamin, das Isomerengemisch aus 2,2,4-und 2,4,4-Trimethylhexamethylendiamin, Bis-(4-aminocyclohexyl)-methan, Bis-(4-aminocyclohexyl)-propan, 4,4′-Diamino-3,3′-dimethyl-dicyclohexylmethan, 3-Aminomethyl-3,5,5-trimethylcyclohexylamin, m- und p-Xylylendiamin. Schließlich können auch Aminocarbonsäuren bzw. ihre Lactame als Comonomere mit eingesetzt werden, beispielsweise ε-Aminocapronsäure, ω-Aminoundekansäure und ω-Aminolaurinsäure.

Bevorzugte amorphe, teilaromatische Polyamide sind solche aus Isophthalsäure und Hexamethylendiamin oder aus Terephthalsäure und dem Isomerengemisch aus 2,2,4- und 2,4,4-Trimethylhexamethylendiamin oder aus Isophthalsäure, Terephthalsäure, Dekandicarbonsäure, Hexamethylendiamin und Bis-(4-aminocyclohexyl)-methan oder aus Adipinsäure, Isophthalsäure, Hexamethylendiamin, 4,4′-Diamino-3,3′-dimethyl-dicyclohexylmethan oder aus Adipinsäure, Hexamethylendiamin, Bis-(4-aminocyclohexyl)-methan oder aus Laurinlactam, Isophthalsäure, 4,4′-Diamino-3,3′-dimethyl-dicyclohexylmethan.

Besonders bevorzugte Polyamide sind amorphe Polyamide aus Isophthalsäure und Hexamethylendiamin.

Geeignete Polyphosphonate und deren Herstellung sind beispielsweise in der Deutschen Offenlegungsschrift 2 944 093 beschrieben. Sie bestehen aus wiederkehrenden Einheiten der Struktur

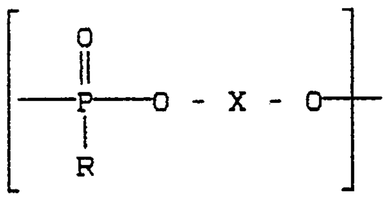

wobei R einen Alkylrest mit 1-6, vorzugsweise 1-3 C-Atomen oder einen gegebenenfalls substituierten Cycloalkyl- mit 5-30, vorzugsweise 6-12 C-Atomen, einen Alkylrest- mit 7-30, vorzugsweise 7-16 C-Atomen, oder einen Arylrest mit 6-30, vorzugsweise 6-18 C-Atomen darstellt.

X bedeutet mindestens einen der Reste Phenylen oder einen Rest

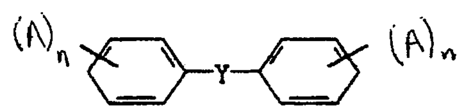

mit Y = eine Bindung oder einen $C_1$-$C_5$-, vorzugsweise $C_1$-$C_3$-Alkylenrest, $C_5$-$C_{12}$-, vorzugsweise $C_6$-$C_{10}$-Cycloalkylenrest oder ein Brückenglied S, O, $SO_2$, CO oder $C(CH_3)_2$.

Die aromatischen Ringe von X können auch unabhängig voneinander mit Alkylgruppen (A) mit 1-4 C-Atomen (bis zu 4 Alkylgruppen pro aromatischer Ring) substituiert sein.

Besonders bevorzugte Polyphosphonate sind die Phosphonsäureester des 4,4'-Dihyroxydiphenyls und/oder des Hydrochinons mit Methanphosphonsäure und/oder Ethanphosphonsäure.

Die Polyphosphonate besitzen vorzugsweise mittlere Molekulargewichte (Zahlenmittel $\overline{M}n$ osmometrisch in Methylenchlorid bestimmt) von 2000 bis 80 000, insbesondere 4000 bis 40 000.

Die Compoundierung der Mischungen erfolgt auf handelsüblichen Ein- und Mehrwellenextrudern herkömmlicher Bauart. Dabei können die vorgemischten Polymeren direkt in den Extruder gegeben werden. Man kann aber auch das Polyphosphonat in bereits geschmolzenes Polyamid dosieren. Diese Arbeitsweise bietet sich an, wenn ein empfindliches Polyphosphonat verwendet wird.

Zur Compoundierung können gegebenenfalls auch sog. "Masterbatches", d.h. Schmelzmischungen aus hohen Anteilen Polyphosphonaten (z.B. 50 bis 90 Gew.-%) und geringen Anteilen (z.B. 50 bis 10 Gew.-%) an amorphen, teilaromatischen Polyamiden mit den amorphen, teilaromatischen Polyamiden zu erfindungsgemäßen Polyamiden vermischt werden, um zu den anspruchsgemäßen, vorzugsweise 3 bis 20 Gew.-%, Polyphosphonate enthaltenden Formmassen zu gelangen.

Die Compoundierung sollte bei Temperaturen von 260 bis 285 °C, vorzugsweise 270 bis 285 °C erfolgen.

Die erfindungsgemäßen, thermoplastisch verarbeitbaren, flammfesten Polyamidformmassen können die üblichen Zusätze und Hilfsmittel in üblichen Mengen nach dem Stand der Technik, beispielsweise einen oder mehrere Füllstoffe, insbesondere Glasfasern in Mengen von 10 bis 60 Gew.-%, bezogen auf die gesamte Mischung enthalten. Als weitere Füll- und Verstärkungsstoffe kommen Mikroglaskugeln, Kreide, Quarze wie Asbest, Feldspat, Glimmer, Talkum, Wollastonit sowie Kaolin in calzinierter und nicht calzinierter Form in Betracht. Außerdem sind Farbstofffe und Pigmente, insbesondere Farbruße und/oder Nigrosinbasen, Stabilisatoren sowie Verarbeitungshilfsmittel zu nennen, ferner die dem Stand der Technik bekannten Schlagzähmodifikatoren, beispielsweise auf der Basis von Copolymerisaten des Ethylens, Poly(meth)-acrylaten und gepfropften Polybutadienen und viele andere mehr, wie in der Literatur und in Patenten beschrieben. Je nach Verwendungszweck können auch weitere Flammschutzmittel mitverwendet werden, z.B. Halogenverbindungen der bekannten Art, gegebenenfalls unter Zusatz von synergistischen Additiven wie Zinkoxid, Zinkboraten, Antimonoxid, Metallsalzen und/oder Melamin bzw. Melaminderivaten der bekannten Art.

Die erfindungsgemäßen Formmassen zeichnen sich durch eine Schwerentflammbarkeit, durch gute Homogenität und gute mechanische und elektrische Eigenschaften aus. Außerdem wird durch die erfindungsgemäße Flammfestausrüstung die Transparenz der Polyamide nicht beeinflußt. Sie eignen sich zur Herstellung von Spritzgießteilen für technische Anwendungen, beispielsweise für Gehäuseteile, Abdeckungen, transparente Teile für Meßgeräte oder auch für Filamente.

Beispiele

Beispiel 1

In 90 Gew.-Teile eines Polyamides aus Isophthalsäure und Hexamethylendiamin mit einer relativen Viskosität von 2,5, gemessen an einer einprozentigen Lösung in m-Kresol bei 25° C werden 10 Gew.-Teile eines Polyphosphonates, hergestellt aus Dihydroxydiphenyl und Methanphosphonsäurediphenylester ($\eta$rel - 1,100, gemessen an einer 0,5 %igen Lösung in Methylenchlorid bei 25° C) auf einem Einwellenextruder (Haake) bei einer Massetemperatur von 278° C eingearbeitet. Das Granulat wird zu transparenten Formkörpern verarbeitet. Das Brandverhalten nach UL, Subj. 94 ist V O für 1,6 mm Wandstärke.

Beispiel 2

Beispiel 1 wird wiederholt wobei eine Mischung aus 15 Gew.-Teilen Polyphosphonat und 75 Gew.-Teilen Polyamid hergestellt wird. Die Massetemperatur beträgt 276° C. Die Formkörper aus dieser Mischung sind transparent und zeigen ein Brandverhalten nach UL Subj. 94 V O für 1,6 mm Wandstärke.

Beispiel 3

In einem Doppelwellenextruder (ZSK 32 der Firma Werner & Pfleiderer) werden 88 Gew.-Teile Polyamid aus Isophthalsäure und Hexamethylendiamin ($\eta$rel = 2,5) und 12 Gew.-Teile Polyphosphonat, hergestellt aus Methanphosphonsäure und 4,4'-Dihydroxydiphenyl ($\eta$rel = 1,100) bei 285° C Massetemperatur gemischt. Man erhält ein Produkt mit einer relativen Viskosität von 2,4, das zu transparenten Formkörpern verarbeitet werden kann. Das Brandverhalten nach UL, Subj. 94 ist V O für 1,6 mm Wandstärke.

Die Kriechstromfestigkeit (VDE 0303, Teil 1, DIN 53 480) hat folgende Werte:
KB 600; KC 600.

Beispiel 4

Eine Mischung aus 80 Gew.-Tle. eines Polyamids aus Isophthalsäure und Hexamethylendiamin und 20 Gew.-Tle. eines Polyphosphonats, hergestellt gemäß DE-A 2 944 093 aus Methanphosphonsäurediphenylester und 4,4'-Dihydroxydiphenyl, wird in einem Einwellenextruder (Haake) bei 274° C Massetemperatur compoundiert. Das Produkt läßt sich zu Formkörpern mit einer Schlagzähigkeit (DIN 53 453) von 42 kJ/m² und einer Wärmeformbeständigkeit von 130° C (Vicat, VSTB) verarbeiten.

Die relativen Viskositäten, gemessen bei 25° C in einem Ubbelohde-Viskosimeter, betragen:

| | |
|---|---|
| Polyphosphonat: | 1,234 (0,5 prozentige Lösung in Methylenchlorid |
| Polyamid: | 2,5 (1 prozentige Lösung in m-Kresol) |
| Mischung; | 2,4 (1 prozentige Lösung in m-Kresol). |

Beispiel 5

Eine Mischung aus 90 Gew.-Tle. des Polyamids aus Isophthalsäure und Hexamethylendiamin aus Beispiel 4 und 10 Gew.-Tle. eines niedermolekularen Polyphosphonats hergestellt aus Dihydroxydiphenyl und Methanphosphonsäurediphenylester ($\eta_{rel}$ - 1,100, 0,5 %ig in Methylenchlorid) werden auf einem Doppelwellenextruder (ZSK 32 der Firma Werner & Pfleiderer) bei 262° C Massetemperatur compoundiert. Man erhält eine Mischung mit einer relativen Viskosität von 2,33 (1 %ig in m-Kresol). Das Granulat wurde zu Formkörpern verarbeitet; die Schlagzähigkeit nach DIN 53 453 beträgt 8 x nicht gebrochen, 2 x 103 kJ/m².

Beispiel 6

95 Gew.-Tle. des Polyamids aus Isophthalsäure und Hexamethylendiamin aus Beispiel 4 und 5 Gew.-Tle. eines Polyphosphonats, hergestellt aus Hydrochinon und Methanphosphonsäurediphenylester ($\eta_{rel}$ = 1,16, 0,5 %ig in Methylenchlorid), werden auf einem Doppelwellenextruder (ZSK 32 der Firma Werner & Pfleiderer) bei einer Massetemperatur von 247° C compoundiert. Man erhält ein gut verarbeitbares Produkt mit einer relativen Viskosität von 2,9 (1 %ig in m-Kresol).

Vergleichsbeispiel 1

Wie in Beispiel 4 beschrieben, wird eine Mischung aus 90 Gew.-Tle. Polyphosphonat und10 Gew.-Tle.

amorphes, teilaromatisches Polyamid bei 274° C Massetemperatur compoundiert. Die Mischung hat eine relative Viskosität von 1,4; die Schlagzähigkeit nach DIN 53 453 beträgt 4 kJ/m², die Wärmeformbeständigkeit nach Vicat, VSTB ist 127° C. Ein zu hoher Polyphosphonatanteil ist zwar compoundierbar, führt aber zu hohem Polymerabbau.

Vergleichsbeispiel 2

Es wird versucht, 20 Gew.-Tle. Polyphosphonat (gemäß Beispiel 4) und 80 Gew.-Tle. Polyamid-66 ($\eta_{rel}$ = 3,0, 1 %ig in m-Kresol) in einem Einwellenextruder (Haake) bei 270° C Massetemperatur zu mischen. Da die Mischung dabei vernetzt, ist die Herstellung eines brauchbaren, verarbeitbaren Granulats nicht möglich.

Vergleichsbeispiel 3

Eine Mischung aus 10 Gew.-Tle. Polyphosphonat (gemäß Beispiel 4) und 90 Gew.-Tle. Polyamid 6 ($\eta_{rel}$ = 3,0 1 %ig in m-Kresol) werden in einem Einwellenextruder (Haake) gegeben. Das Material läßt sich bei einer Temperatur von ca. 270° C nicht extrudieren, da es bereits im Extruder vernetzt.

**Patentansprüche**

1. Thermoplastisch verarbeitbare, flammfeste Polyamidmassen, die aus Mischungen aus
   1) 60-97 Gew.-% eines amorphen, teilaromatischen Polyamids, das zu mindest zu 30 Mol% aus aromatischen Polyamidkomponenten aufgebaut ist, und
   2) 3-40 Gew.-% eines Polyphosphonats aus wiederkehrenden Einheiten der Struktur

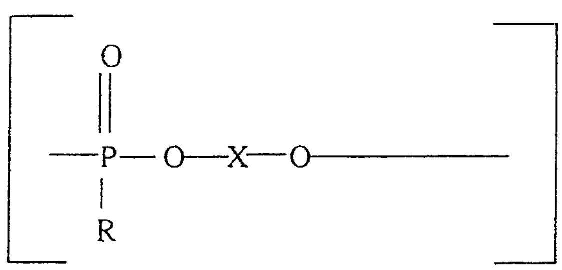

   wobei
   R einen Alkylrest mit 1-6, oder einen gegebenenfalls substituierten Cycloalkylrest mit 5-30. oder einen Arylrest mit 6-30 C-Atomen,
   X mindestens einen der Reste Phenylen oder einen Rest

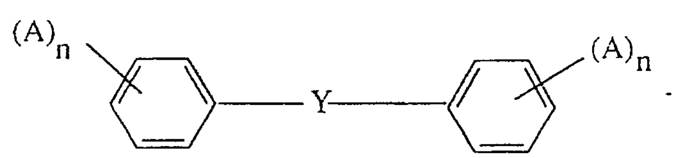

   darstellt, in dem n eine ganze Zahl von 0 bis 4
   und Y eine Bindung oder einen $C_1$-$C_5$- Alkylenrest, einen $C_5$-$C_{12}$-, Cycloalkylenrest oder ein Brückenglied S, O, $SO_2$, CO oder C $(CH_3)_2$ bedeutet und die aromatischen Ringe unabhängig voneinander gegebenenfalls mit $C_1$-$C_4$-Alkylgruppen (A) mit bis zu 4 Alkylgruppen pro Ring substituiert sind,
   wobei die Summe der beiden Komponenten 1) + 2) immer 100 Gew.-% betragen muß und die Mischung gegebenenfalls zusätzlich Zusätze und Hilfsmittel aus der Reihe von Füllstoffen oder Glasfasern in Mengen von 10-60 Gew.-%, bezogen auf die gesamte Mischung, Farbstoffe. Pigmente, Stabilisatoren, Verarbeitungshilfsmittel, Schlagzähmodifikatoren, weitere Flammschutzmittel in üblichen Mengen enthält, bestehen.

2. Polyamidmassen nach Anspruch 1, dadurch gekennzeichnet, daß die amorphen, teilaromatischen

Polyamide 1) zu mindest 50 Mol% aus aromatischen Dicarbonsäuren aufgebaut sind und gegebenenfalls aliphatische oder cycloaliphatische Dicarbonsäuren mitverwendet werden.

3. Polyamidmassen nach Ansprüchen 1 und 2, dadurch gekennzeichnet, daß in den amorphen, teilaromatischen Polyamiden 1) als Diamine Tetramethylendiamin, Hexamethylendiamin, das Isomerengemisch aus 2,2,4 und 2,4,4-Trimethylhexamethylendiamin,
Bis(4-aminocyclohexyl)methan,
Bis(4-aminocyclohexyl)propan,
4,4'-Diamino-3,3'-dimethyl-dicyclohexyl-methan,
3-Aminomethyl-3,5,5-trimethyl-cyclohexylamin und
m-und p-Xylylendiamin verwendet werden.

4. Polyamidmassen nach Ansprüchen 1-3, dadurch gekennzeichnet, daß in den teilaromatischen Polyamiden Aminocarbonsäuren oder ihre Laktame als Comonomere eingesetzt werden.

5. Polyamidmassen nach Ansprüchen 1-4, dadurch gekennzeichnet, daß die amorphen teilaromatischen Polyamide (1) aus Isophthalsäure und Hexamethylendiamin oder aus Terephthalsäure und dem Isomerengemisch aus 2,24-und 2,4,4-Trimethylhexamethylen-diamin oder aus Isophthalsäure, Terephthalsäure, Dekandicarbonsäure, Hexamethylen-diamin und Bis-(4aminocyclohexyl)-methan oder aus Adipinsäure, Isophthalsäure, Hexamethylendiamin, 4,4'Diamino-3,3'dimethyl-dicyclohexylmethan oder aus Laurinlactam, Isophthalsäure und 4,4'-Diamino-3,3'-dimethyl-dicyclohexylmethan bestehen.

6. Polyamidmassen nach Ansprüchen 1-5, dadurch gekennzeichnet, daß die amorphen, teilaromatischen Polyamide (1)
aus Isophthalsäure und Hexamethylendiamin bestehen.

7. Polyamidmassen nach Anspruch 1-6, dadurch gekennzeichnet, daß sie aus Mischungen aus
   1. 97-80 Gew.-% eines amorphen, teilaromatischen Polyamids und
   2. 3-20 Gew.-% eines Polyphosphonats der angegebenen Formel bestehen.

8. Polyamidformmassen nach Ansprüchen 1 bis 7, dadurch gekennzeichnet, daß die Polyphosphonate mittlere Molekulargewichte (Zahlenmittel Mn., osmometrisch in Methylenchlorid bestimmt) von 2.000 bis 80.000 aufweisen.

9. Polyamidmassen nach Ansprüchen 1-8, dadurch gekennzeichnet, daß in dem Polyphosphonaten der Rest
R einen Alkylrest mit 1-3 C-Atomen oder einen gegebenenfalls substituierten Cycloalkylrest mit 6-12 C-Atomen oder einen Arylrest mit 6-18 C-Atomen,
X mindestens einen der Reste Phenylen oder einen Rest

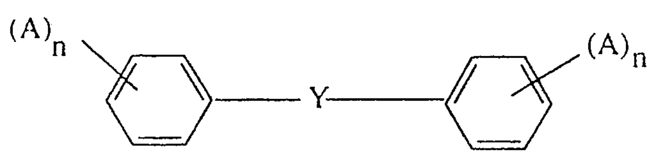

darstellt, in dem n eine ganze Zahl von 0 bis 4 ist,
Y eine Bindung oder einen $C_1$-$C_3$-Alkylenrest, einen $C_6$-$C_{10}$-Cycloalkylenrest oder ein Brückenglied S,O, $SO_2$, CO oder C $(CH_3)_2$) und
A $C_1$-$C_4$-Alkylgruppen bedeuten.

10. Polyamidformmassen nach Ansprüchen 1 bis 4 dadurch gekennzeichnet, daß die Polyphosphonate Phosphonsäureester des 4,4'Dihydroxydiphenyls und/oder des Hydrochinons mit Methanphosphonsäure oder Ethanphosphonsäure darstellen.

**Claims**

1. Thermoplastically processable flameproof polyamide moulding compounds consisting of mixtures of

1) 60 to 97% by weight of an amorphous, partly aromatic polyamide of which at least 30 mol-% is made up of aromatic polyamide components and
2) 3 to 40% by weight of a polyphosphonate of recurring units having the following structure

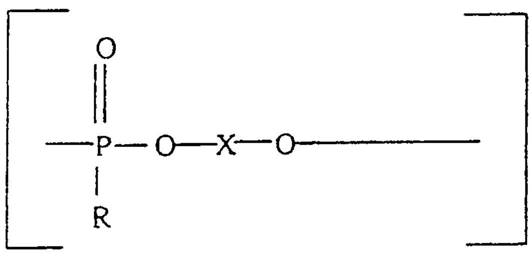

in which
R is a $C_{1-6}$ alkyl radical or an optionally substituted $C_{5-30}$ cycloalkyl radical or a $C_{6-30}$ aryl radical,
X is at least one of the units phenylene or a unit

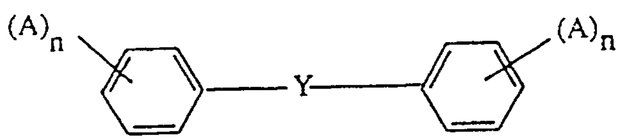

in which n is an integer of 0 to 4
and Y is a bond or a $C_{1-5}$ alkylene radical, a $C_{5-12}$ cycloalkylene radical or a bridge member S, O, $SO_2$, CO or $C(CH_3)_2$ and the aromatic rings independently of one another are optionally substituted by $C_{1-4}$ alkyl groups (A) containing up to 4 alkyl groups per ring,
the sum of the two components 1) + 2) always having to be 100% by weight and the mixture optionally containing additives and auxiliaries from the series of fillers or glass fibers in quantities of 10 to 60% by weight, based on the mixture as a whole, dyes, pigments, stabilizers, processing aids, impact modifiers, other flameproofing agents in the usual quantities.

2. Polyamide moulding compounds as claimed in claim 1, characterized in that at least 50 mol-% of the amorphous, partly aromatic polyamides 1) are made up of aromatic dicarboxylic acids and aliphatic or cycloaliphatic dicarboxylic acids are optionally co-used.

3. Polyamide moulding compounds as claimed in claims 1 and 2, characterized in that tetramethylene diamine, hexamethylene diamine, the isomer mixture of 2,2,4- and 2,4,4-trimethyl hexamethylene diamine, bis-(4-aminocyclohexyl)-methane, bis-(4-aminocyclohexyl)-propane, 4,4'-diamino-3,3'-dimethyl dicyclohexyl methane, 3-aminomethyl-3,5,5-trimethyl cyclohexylamine and m- and p-xylylene diamine are used as diamines in the amorphous partly aromatic polyamides 1).

4. Polyamide moulding compounds as claimed in claims 1 to 3, characterized in that aminocarboxylic acids or their lactams are used as comonomers in the partly aromatic polyamides.

5. Polyamide moulding compounds as claimed in claims 1 to 4, characterized in that the amorphous partly aromatic polyamides (1) consist of isophthalic acid and hexamethylene diamine or of terephthalic acid and the isomer mixture of 2,2,4- and 2,4,4-trimethyl hexamethylene diamine or of isophthalic acid, terephthalic acid, decane dicarboxylic acid, hexamethylene diamine and bis-(4-aminocyclohexyl)-methane or of adipic acid, isophthalic acid, hexamethylene diamine, 4,4'-diamino-3,3'-dimethyl dicyclohexyl methane or of lauric lactam, isophthalic acid and 4,4'-diamino-3,3'-dimethyl dicyclohexyl methane.

6. Polyamide moulding compounds as claimed in claims 1 to 5, characterized in that the amorphous partly aromatic polyamides (1) consist of isophthalic acid and hexamethylene diamine.

7. Polyamide moulding compounds as claimed in claims 1 to 6, characterized in that they consist of

mixture of

1. 97 to 80% by weight of an amorphous, partly aromatic polyamide and
2. 3 to 20% by weight of a polyphosphonate corresponding to the above formula.

**8.** Polyamide moulding compounds as claimed in claims 1 to 7, characterized in that the polyphosphonates have average molecular weights (number average Mn, as determined by osmometry in methylene chloride) of 2,000 to 80,000.

**9.** Polyamide moulding compounds as claimed in claims 1 to 8, characterized in that, in the polyphosphonate, the substituent
R is a $C_{1-3}$ alkyl radical or an optionally substituted $C_{6-12}$ cycloalkyl radical or a $C_{6-18}$ aryl radical,
X is at least one of the units phenylene or a unit

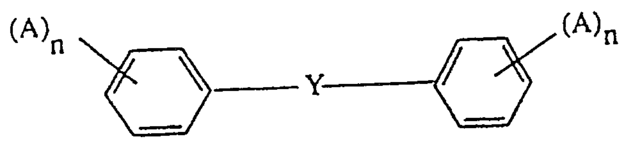

in which n is an integer of 0 to 4
and Y is a bond or a $C_{1-3}$ alkylene radical, a $C_{6-10}$ cycloalkylene radical or a bridge member S, O, $SO_2$, CO or $C(CH_3)_2$ and
A represents $C_{1-4}$ alkyl groups.

**10.** Polyamide moulding compounds as claimed in claims 1 to 4, characterized in that the polyphosphonates are phosphonic acid esters of 4,4'-dihydroxydiphenyl and/or hydroquinone with methane phosphonic acid or ethane phosphonic acid.

**Revendications**

**1.** Masses de polyamides ignifuges, aptes au travail thermoplastique, consistant en mélanges de

1) 60 à 97 % en poids d'un polyamide amorphe, aromatique en partie, constitué pour au moins 30 moi % de composants de polyamides aromatiques et

2) 3 à 40 % en poids d'un polyphosphonate consistant en motifs répétés de structure

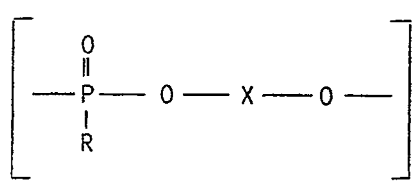

dans laquelle
R représente un groupe alkyle en $C_1$-$C_6$ ou un groupe cycloalkyle éventuellement substitué en $C_5$-$C_{30}$ ou un groupe aryle en $C_6$-$C_{30}$,
X représente au moins l'un des groupes phénylène ou

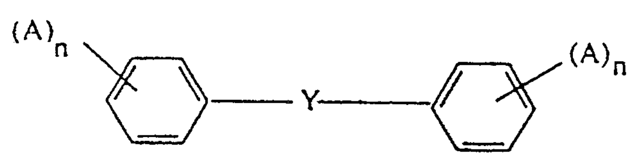

dans lequel n est un nombre allant de 0 à 4 et
Y représente une liaison ou un groupe alkylène en $C_1$-$C_5$, un groupe cycloalkylène en $C_5$-$C_{12}$ ou un pont S, O, $SO_2$, CO ou $C(CH_3)_2$, et les noyaux aromatiques peuvent le cas échéant, indépendamment l'un de l'autre, être substitués par des groupes alkyle en $C_1$-$C_4$ (A), avec jusqu'à quatre groupes alkyle par noyau,

la somme des deux composants 1) + 2) représentant toujours 100 % en poids, et le mélange contenant en outre, le cas échéant des additifs et des produits auxiliaires pris parmi les matières de charge ou les fibres de verre en quantités de 10 à 60 % du poids du mélange total, les colorants, les pigments, les stabilisants, les produits auxiliaires de façonnage, les agents modifiants de la résilience, d'autres agents ignifugeants, aux proportions habituelles.

**2.** Masses de polyamides selon la revendication 1, caractérisées en ce que les polyamides amorphes, aromatiques en partie, 1) sont constitués pour au moins 50 mol % d'acides dicarboxyliques aromatiques, avec le cas échéant utilisation conjointe d'acides dicarboxyliques aliphatiques ou cycloaliphatiques.

**3.** Masses de polyamides selon les revendications 1 et 2, caractérisées en ce que les diamines utilisées dans les polyamides amorphes, aromatiques en partie, 1) sont la triméthylène-diamine, l'hexaméthylène-diamine, le mélange des isomères : 2,2,4- et 2,4,4-triméthylhexaméthylène-diamine, le bis-(4-aminocyclohexyl)-méthane, le bis-(4-aminocyclohexyl)-propane, le 4,4'-diamino-3,3'-diméthyldicyclohexylméthane, la 3-aminométhyl-3,5,5-triméthyl-cyclohexylamine et la m- et la p-xylylène-diamine.

**4.** Masses de polyamides selon les revendications 1 à 3, caractérisées en ce que, dans les polyamides aromatiques en partie, on a utilisé des acides aminocarboxyliques ou leurs lactames en tant que comonomères.

**5.** Masses de polyamides selon les revendications 1 à 4, caractérisées en ce que les polyamides amorphes, aromatiques en partie, 1) consistent en acide isophtalique et hexaméthylènediamine ou en acide téréphtalique et le mélange d'isomères : 2,2,4- et 2,4,4-triméthylènehexaméthylène-diamine ou en acide isophtalique, acide téréphtalique, acide décane-dicarboxylique, hexaméthylène-diamine et bis-(4-aminocyclohexyl)-méthane ou en acide adipique, acide isophtalique, hexaméthylène-diamine, 4,4'-diamino-3,3'-diméthyl-dicyclohexylméthane, ou en laurolactame, acide isophtalique et 4,4'-diamino-3,3'-diméthyl-cyclohexylméthane.

**6.** Masses de polyamides selon les revendications 1 à 5, caractérisées en ce que les polyamides amorphes, aromatiques en partie, 1) consistent en acide isophtalique et hexaméthylènediamine.

**7.** Masses de polyamides selon les revendications 1 à 6, caractérisées en ce qu'elles consistent en mélanges de
1) 97 à 80 % en poids d'un polyamide amorphe, aromatique en partie, et
2) 3 à 20 % en poids d'un polyphosphonate de formule ci-dessus.

**8.** Matières à mouler en polyamides selon les revendications 1 à 7, caractérisées en ce que les polyphosphonates ont des poids moléculaires moyens (moyenne en nombre $\overline{M}n$, mesurée par osmométrie dans le chlorure de méthylène) de 2 000 à 80 000.

**9.** Masses de polyamides selon les revendications 1 à 8, caractérisées en ce que, dans le polyphosphonate,
R représente un groupe alkyle en $C_1$-$C_3$ ou un groupe cycloalkyle en $C_6$-$C_{12}$ éventuellement substitué ou un groupe aryle en $C_6$-$C_{18}$,
X représente au moins l'un des groupes phénylène ou

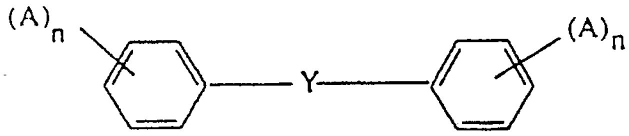

dans lequel n est un nombre entier allant de 0 à 4,
Y représente une liaison ou un groupe alkylène en $C_1$-$C_3$, un groupe cycloalkylène en $C_6$-$C_{10}$ ou un

pont S, O, $SO_2$, CO ou $C(CH_3)_2$ et
les symboles A représentent des groupes alkyle en $C_1$-$C_4$.

**10.** Matières à mouler en polyamides selon les revendications 1 à 4, caractérisées en ce que les polyphosphonates sont des esters phosphoniques du 4,4'-dihydroxydiphényle et/ou de l'hydroquinone avec l'acide méthane-phosphonique ou l'acide éthane-phosphonique.